# EUROPEAN PATENT APPLICATION

(11) **EP 1 803 532 A1**
(43) Date of publication of application: **04.07.2007**
(21) Application number: 06026434.8
(22) Date of filing: 20.12.2006
(51) Int. Cl.: B24C 1/00, B24C 1/06, B24C 1/10, B24C 11/00

(54) **Powder for grinding and grinding method**

(30) Priority: 28.12.2005 JP 2005380459; 24.10.2006 JP 2006289141
(71) Applicant: SEIKO EPSON CORPORATION, Shinjuku-ku Tokyo 163-0811 (JP)
(72) Inventor: Watanabe, Atsushi, Hachinobe-shi Aomori 039-1161 (JP); Izaki, Hiroshi, Hachinobe-shi Aomori 039-1161 (JP)
(74) Representative: HOFFMANN EITLE

(57) **Abstract**

Powder for grinding according to the present invention is powder for grinding that is manufactured according to the atomize method and serves as a medium for grinding a surface of a base substrate to form concave portions. The powder for grinding contains as its components at least one of Fe and Ni and W (tungsten) and a content of W is 30 to 55 wt% and a specific gravity thereof is equal to or higher than 8.5. Preferably, the powder for grinding further contains Cr at a content of 1 to 25 wt%. Preferably, the powder for grinding further contains B at a content of 0.5 to 4 wt%. It is possible to surely collect the powder for grinding making use of a difference between a specific gravity of the powder for grinding and a specific gravity of grinding wastes. The powder for grinding collected is suitable for being served for reuse at least once.

## Description

### CROSS-REFERENCE TO RELATED APPLICATION

This application claims a priority to Japanese Patent Applications No. 2005-380459 filed on December 28, 2005 and Japanese Patent Applications No. 2006-289141 filed on October 24, 2006 which are hereby expressly incorporated by reference herein in their entirety.

### BACKGROUND

### 1. Technical Field

The present invention relates to powder for grinding and a grinding method.

### 2. Related Art

As an example of a grinding method, there is a method of jetting metal powder onto a member to be treated and causing particles in the metal powder to collide with the member to be treated to thereby grind the member to be treated (a shot blast method).

In the shot blast method, powder of nonmetal materials such as sand and a ceramic material, various kinds of metal powder, and the like are used as abrasives.

In particular, metal powder can give sufficient collision energy (kinetic energy) to the member to be treated even if particles contained in the metal powder are reduced in diameter because a specific gravity of the particles is large. Thus, the metal powder displays .excellent grindability (grinding speed). This makes it possible to perform fine grinding.

As such metal powder, for example, metal powder containing, with Fe as a main component, C, Si, Mn, Cr, Al, and Ti is disclosed (see, for example, JP-A-2004-148413).

However, the metal powder disclosed in JP-A-2004-148413 has a composition containing, with Fe as the main component, elements having atomic weights smaller than that of Fe. Thus, the metal powder has a specific gravity of about 7.4, which is smaller than that of Fe. Therefore, when particles of the metal powder are reduced in diameter, sufficient grindability is not obtained with the specific gravity of this order.

Since the metal powder disclosed in JP-A-2004-148413 contains Al and Ti, the metal powder rapidly sets from a fused state when the metal powder is manufactured. As a result, the particles of the metal powder tend to be deformed. It is likely that the deformed particles are easily broken when the particles collide with the member to be treated. Therefore, the metal powder is not suitable for collection after use and for reuse.

However, in recent years, in the fields of semiconductor and display devices, there is a demand for grinding at higher dimensional accuracy. Since a range (an area) to be ground is expanded according to the demand for higher dimensional accuracy, high grindability (grinding speed) has to be secured.

Under such circumstances, there is a demand for development of metal powder having a larger specific gravity to make it possible to obtain sufficient grindability even if particles of the metal powder is further reduced in diameter.

It is also considered important to form the particles of the metal powder in a spherical shape to prevent the particles from being easily broken even if the particles are reduced in diameter.

### SUMMARY

It is therefore an object of the present invention to provide powder for grinding containing particles of a spherical shape that shows sufficient grindability (grinding speed) even if the particles are reduced in diameter and is reusable and a method of efficiently grinding a base substrate using such powder for grinding.

A first aspect of the invention is directed to Powder for grinding. The Powder for grinding is manufactured according to the atomize method and used for grinding a surface of a base substrate to form concave portions. The powder for grinding contains as its components at least one of Fe and Ni and W (tungsten). A content of W is 30 to 55 wt% and a specific gravity thereof is equal to or higher than 8.5.

Consequently, powder for grinding containing spherical particles showing sufficient grindability (grinding speed) even if the particles are reduced in diameter is obtained.

It is preferable that a total content of Fe and Ni is 25 to 70 wt%.

This makes it possible to improve mechanical characteristics while maintaining corrosion resistance (oxidation resistance) of the powder for grinding.

It is preferable that the powder for grinding further contains Cr at a content of 1 to 25 wt%.

This makes it possible to further improve the corrosion resistance of the powder for grinding while maintaining the specific gravity of the powder for grinding at 8.5 or more.

It is preferable that the powder for grinding contains Fe as an essential element, and a ratio of Fe and Cr is in the range of 6:4 to 9.5:0.5 in a weight ratio.

Consequently, the effect of improvement of the corrosion resistance of Cr is displayed more conspicuously. It is possible to further improve the corrosion resistance of the entire powder for grinding.

It is preferable that Cr is contained in the powder in the form of a passivation film which covers at least a part of the surface of a particle of the powder for grinding.

The passivation film containing Cr can improve abrasion resistance in addition to the corrosion resistance of the powder for grinding.

Therefore, even when the powder for grinding is collected and reused, occurrence of defects, deformations, wear, and the like of the powder for grinding is prevented. It is possible to obtain grindability equivalent to grindability in the first use of the powder for grinding.

It is preferable that the powder for grinding further contains B (boron) at a content of 0.5 to 4 wt%.

Consequently, particles of powder for grinding obtained are formed in a spherical shape closer to a perfect sphere. As a result, the powder for grinding is prevented from being caught in the concave portions, more excellent in durability, and suitable for reuse.

It is preferable that a content of C (carbon) is equal to or lower than 0.8 wt%.

By controlling the content of C to be within the range described above, it is possible to prevent WC (tungsten carbide), which is a compound of W and C, from being generated. Since WC has extremely high hardness, the hardness of powder for grinding containing WC becomes high more than requires. Therefore, by holding down the content of C in the powder for grinding, it is possible to prevent the hardness from becoming extremely high.

It is preferable that an average particle diameter of the particles of the powder for grinding is in the range of 5 to 20 µm.

This makes it possible to easily grind a base structure to form narrower concave portions. In other words, it is possible to form concave portions at high dimensional accuracy.

It is preferable that the powder for grinding contains particles having a particle diameter equal to or larger than 50 µm measured by a laser particle size analyzer, the ratio of such particles is equal to or lower than 5 wt%.

Consequently, particles having an extremely large particle diameter are prevented from being contained in the powder for grinding. It is possible to prevent deterioration in dimensional accuracy of the concave portions formed by grinding.

It is preferable that a tap density (defined by JPMA P08-1992 of the Japan Powder Metallurgy Association Standard) is equal to or higher than 5g/cm³.

Consequently, the particles of the powder for grinding are formed in a spherical shape sufficiently close to the perfect sphere.

It is preferable that the atomize method is a water atomize method.

In the water atomize method, the water having a density higher than those of gas and the like is used as a cooling medium. Therefore, when molten metal collides with high-pressure water jet, the molten metal is subjected to large energy and scatters to change to finer droplets. As a result, it is possible to obtain finer powder.

It is preferable that the concave portions are grooves having an average width of w (µm), and an average particle diameter of the particles of the powder for grinding is in the range of 0.07w to 0.7w (µm).

Consequently, even when a distribution of particle diameters of the particles of the powder for grinding is taken into account, it is possible to efficiently form the grooves at high dimensional accuracy without the powder for grinding being caught in the grooves.

It is preferable that the powder for grinding is served for reuse at least once.

This makes it possible to reduce a disposal quantity of the powder for grinding and realize a reduction in cost for a grinding process in which the powder for grinding is used.

A second aspect of the invention is directed to a grinding method. In the grinding method, a surface of a base substrate is ground with the above powder for grinding to form concave portions on the surface.

This makes it possible to efficiently grind the base substrate.

It is preferable that, after the grinding, the powder for grinding is selectively collected out of a mixture of grinding wastes and the powder for grinding left after the grinding making use of a difference between a specific gravity of the grinding wastes and a specific gravity of the powder for grinding.

This makes it possible to surely separate and collect the powder for grinding.

### BRIEF DESCRIPTION OF THE DRAWINGS

Fig. 1 is a schematic longitudinal sectional view of a substrate with concave portions for microlens;

Fig. 2 is a schematic longitudinal sectional view of a substrate for microlens;

Fig. 3 is a schematic diagram for explaining a method of manufacturing the substrate with concave portions for microlens shown in Fig. 1;

Fig. 4 is a schematic diagram for explaining the method of manufacturing the substrate with concave portions for microlens shown in Fig. 1; and

Fig. 5 is a schematic diagram for explaining the method of manufacturing the substrate with concave portions for microlens shown in Fig. 1.

### DESCRIPTION OF EXEMPLARY EMBODIMENTS

A powder for grinding and a grinding method according to the present invention will be hereinafter explained in detail with reference to the accompanying drawings.

Powder for grinding

The powder for grinding according to the present invention is caused to collide with a surface of a substrate to serve as a medium for grinding the surface to form concave portions.

The powder for grinding is manufactured according to the atomize method and contains as its components at least one of Fe and Ni and W (tungsten). A content of W is 30 to 55 wt% and a specific gravity (a true specific gravity) thereof is equal to or higher than 8.5.

The atomize method is a method of jetting a cooling medium (liquid, gas, etc.) as a high-pressure jet and causing a metal material heated and liquidized (molten metal) to collide with this jet to pulverize the metal material. The molten metal collides with the jet to change to fine droplets. The droplets come into contact with the cooling medium to be rapidly cooled and set. At this point, since the droplets is cooled while free-falling, the droplets spheronize due to the surface tension. This makes it possible to easily manufacture powder containing very small and spherical particles.

As described above, the powder for grinding according to the present invention collides with the surface of the base substrate to serve as a medium for forming concave portions on the surface. If the powder for grinding contains spherical particles, in forming the concave portions, the powder for grinding is less easily caught in the concave portions. Since the powder containing the spherical particles has a shape characteristic excellent in durability against loads, deformation and destruction of the powder for grinding are prevented when the powder collides with the surface. Thus, the powder for grinding is more suitable for reuse.

Examples of the atomize method include the water atomize method, the gas atomize method, the vacuum fusion gas atomize method, the gas-water atomize method, and the ultrasonic atomize method. Among these methods, the water atomize method is preferable.

In the water atomize methods, the water having a density higher than those of gas and the like is used as a cooling medium. Therefore, when molten metal collides with high-pressure water jet, the molten metal is subjected to large energy and scatters to change to finer droplets. As a result, it is possible to obtain finer powder.

Since the water has a large heat content compared with the gas, when the water collides with the molten metal, it is possible to rapidly cool the droplets obtained by scattering the molten material. Therefore, the growth of crystals in the droplets is hindered. A crystalline structure in the powder formed from the set droplets becomes finer. Consequently, the powder obtained is excellent in mechanical characteristics such as hardness and toughness.

Besides the method of causing the molten metal to collide with the high-pressure water jet as described above, the molten metal may be sprayed into the water flowing at high speed in a container to obtain powder containing very small metal particles.

As described above, the powder for grinding according to the present invention contains at least one of Fe and Ni and W as components and a content of W is 30 to 55 wt%.

Fe and Ni as well as W are main elements forming the powder for grinding and substantially affect basic mechanical characteristics (strength, toughness, hardness, etc.) and the like of the powder for grinding. In particular, since Fe and Ni have relatively high toughness, Fe and Ni are components that contribute to durability when the powder for grinding is reused.

A total content of Fe and Ni is preferably 25 to 70 wt%, more preferably 30 to 65 wt%, and still more preferably 35 to 55 wt%. This makes it possible to improve the mechanical characteristics while maintaining corrosion resistance (oxidation resistance) of the powder for grinding.

W is a component that has an atomic weight larger than those of Fe and Ni and increases (adjusts) a specific gravity of the powder for grinding. W is relatively excellent in the corrosion resistance (oxidation resistance). When W is contained by 30 to 55 wt%, it is possible to decrease contents of Fe and Ni, which are relatively inferior in the corrosion resistance. It is also possible to improve the corrosion resistance of the entire powder for grinding. In particular, when a content of Fe is high in the powder for grinding, such a tendency is conspicuous.

Moreover, W has a particularly small diffusion coefficient in Fe and Ni. It is surmised that this is because, since a difference between atomic radiuses of Fe and Ni and an atomic radius of W is extremely large, movement of W in Fe and Ni is regulated. Therefore, even when the powder for grinding is heated, it is possible to control the diffusion of W to effectively prevent a crystalline structure from enlarging. As a result, for example, even if the powder for grinding is heated by heat generated by the collision of the powder for grinding with the base substrate, it is possible to prevent deterioration in the mechanical characteristics such as hardness, toughness, and the like that depend on a state of the crystalline structure. The powder for grinding is suitably served for reuse plural times.

The diffusion coefficient of W in Fe and Ni falls as the content of W increases. Thus, it is preferable that W is contained as much as possible.

On the other hand, since W is a metal element having an extremely high melting point, a melting point of a metal material containing W rises according to the increase in the content of W. Therefore, when a heatproof temperature of a furnace or a crucible for fusing a material is taken into account, it is also necessary to set an upper limit value for the content of W.

From such a viewpoint, although the content of W is set to 30 to 35 wt% as described above, the content of W is preferably 32 to 50 wt% and more preferably 35 to 45 wt%. By setting the content of W in the range, it is possible to increase a specific gravity of the powder for grinding and particularly effectively prevent deterioration in the mechanical characteristics while controlling the rise of the melting point of the metal material containing W within a temperature range in which the metal material can be easily fused.

As described above, a specific gravity of the powder for grinding is set to be equal to or higher than 8.5. This makes it possible to give sufficient collision energy to the base substrate even if the particles of the powder for grinding are reduced in diameter. The powder for grinding displays excellent grindability (grinding speed). As a result, it is possible to grind the base substrate into a fine pattern at high dimensional accuracy.

When the specific gravity of the powder for grinding is high in this way, it is easy to secure a difference between the specific gravity of the powder for grinding and a specific gravity of grinding wastes formed by grinding when the powder for grinding collides with the base substrate. This makes it possible to easily separate and collect the powder for grinding and the grinding wastes according to a separation method that makes use of the difference in the specific gravities. As a result, it is possible to surely collect the powder for grinding while preventing inclusion of foreign matters.

The specific gravity of the powder for grinding is preferably equal to or higher than 9. This further improves the grindability of the powder for grinding and makes it easier to separate and collect the powder for grinding and the grinding wastes because the difference between the specific gravity of the powder for grinding and the specific gravity of the grinding wastes is more conspicuous.

The powder for grinding further contains Cr at a content of preferably 1. to 25 wt% and more preferably 5 to 20 wt%. Cr is a component that can improve the corrosion resistance (oxidation resistance) of the powder for grinding. If the content of Cr is within the range, it is possible to further improve the corrosion resistance of the powder for grinding while maintaining the specific gravity of the powder for grinding at 8.5 or more.

In particular, when the powder for grinding contains Fe as an essential element, a ratio of Fe and Cr is preferably in the range of 6:4 to 9.5:0.5 and more preferably in the range of 6.5:3.5 to 9:1 in a weight ratio. Consequently, the effect of improvement of the corrosion resistance of Cr is more conspicuously displayed against oxidation, corrosion, and the like of Fe. It is possible to further improve the corrosion resistance of the entire powder for grinding.

Such Cr is preferably contained as a passivation film that covers at least a part of the surface of a particle of powder for grinding. The passivation film containing Cr can improve abrasion resistance in addition to the corrosion resistance of the powder for grinding. Therefore, even when the powder for grinding is collected and reused, occurrence of defects, deformations, wear, and the like of the powder for grinding is prevented. It is possible to obtain grindability equivalent to grindability in the first use of the powder for grinding.

The powder for grinding more preferably further contains B (boron) at a content of 0.5 to 4 wt% and more preferably 1 to 3 wt%. When a metal material containing B is fused according to the atomize method, a freezing point (a melting point) thereof falls because of an influence of B. This makes it possible to secure longer time until droplets thereof is set. The droplets sufficiently spheronize due to the surface tension. Therefore, particles of powder for grinding obtained are formed in a spherical shape closer to a perfect sphere. As a result, the powder for grinding is prevented from being caught in the concave portions and is more excellent in durability and suitable for reuse.

The powder for grinding preferably does not substantially contain both Al and Ti. Since Al and Ti particularly rapidly form a firm oxide film, when molten metal is changed to droplets according to the atomize method, the droplets are rapidly set before the droplets spheronize. Therefore, when the powder for grinding does not contain Al and Ti, time necessary for the droplets to spheronize is secured and particles of powder for grinding obtained are formed in a spherical shape closer to the perfect sphere.

The powder for grinding, the particles of which have spheronized, has a tap density (defined by JPMA P08-1992 of the Japan Powder Metallurgy Association Standard) preferably equal to or higher than 5 g/cm³ and more preferably equal to or higher than 5.5 g/cm³. The tap density shows a higher tendency as a shape of particles of powder is closer to the perfect sphere. Therefore, when the tap density takes a relatively high value like a value in the range, it is possible to consider that the particles of the powder for grinding are formed in a spherical shape sufficiently close to the perfect sphere.

The particles of the powder for grinding have an average particle diameter preferably in the range of about 5 to 20 µm and more preferably in the range of about 5 to 15 µm. With such powder for grinding containing very small particles, it is possible to easily grind the base substrate to form narrower concave portions. In other words, it is possible to form concave portions at high dimensional accuracy.

The powder for grinding according to the present invention has a high specific gravity equal to or higher than 8.5. Thus, if an average particle diameter is within the range, it is possible to secure sufficient grindability (grinding speed). This makes it possible to efficiently form concave portions having high dimensional accuracy.

In particular, in the powder for grinding, a ratio of powder containing particles having a particle diameter equal to or larger than 50 µm measured by a laser particle size analyzer is preferably equal to or lower than 5 wt% and more preferably equal to or lower than 3 wt%. Consequently, particles having an extremely large particle diameter are prevented from being contained in the powder for grinding. It is possible to prevent deterioration in dimensional accuracy of concave portions formed by grinding.

The powder for grinding has a micro Vickers hardness HmV of preferably about 200 to 600 and more preferably about 250 to 500. If the micro Vickers hardness is within the range, it is possible to surely prevent an object to be ground from being damaged because the powder for grinding is too hard when the powder for grinding collides with the object to be ground.

On the other hand, when the micro Vickers hardness HmV of the powder for grinding is lower than the lower limit value, it is likely that efficiency of the grinding falls and longer time is required for the grinding. When the micro Vickers hardness HmV of the powder for grinding is higher than the upper limit value, in particular, if the object to be ground is formed from a material having relatively low hardness such as a glass material or a resin material, it is likely that the object to be ground is damaged because of the grinding.

In the powder for grinding, a content of C (carbon) is preferably as low as possible.

Even when C is not intentionally added, C may be inevitably included in a material for manufacturing the powder for grinding. Even in such a case, the content of C is preferably equal to or lower than 0.8 wt% and more preferably equal to or lower than 0.5 wt%. By controlling the content of C to be within the range, it is possible to prevent WC (tungsten carbide), which is a compound of W and C, from being generated. Since WC has extremely high hardness, the hardness of powder for grinding containing WC becomes extremely high easily exceeding the upper limit value. Therefore, by holding down the content of C in the powder for grinding, it is possible to prevent the hardness from becoming extremely high.

The powder for grinding shows sufficient grindability even if the particles of the powder for grinding are reduced in diameter. By causing the powder for grinding to collide with the surface of the base substrate, it is possible to grind the surface to form concave portions having high dimensional accuracy.

The powder for grinding according to the present invention is preferably used for forming concave portions having an average width of about 30 to 70 µm and more preferably used for forming concave portions having an average width of about 30 to 55 µm. In forming such concave portions having an extremely small width, with the powder for grinding according to the present invention, it is possible to form the concave portions at high dimensional accuracy.

When concave portions are grooves having an average width of w (µm), an average particle diameter of the particles of the powder for grinding is preferably in the range of about 0.07w to 0.7w (µm) and more preferably in the range of about 0.07w to 0.3w (µm). When the width w of the grooves and the average particle diameter of the particles of the powder for grinding have such a relation, even if a distribution of particle diameters of the particles of the powder for grinding is taken into account, it is possible to efficiently form the grooves at high dimensional accuracy without the powder for grinding being caught in the grooves.

Grinding method

The grinding method according to the present invention will be explained.

The grinding method according to the present invention is a method of causing the powder for grinding described above to collide with a surface of a substrate to grind the surface and form concave portions.

As an example, the grinding method according to the present invention applied to a method of manufacturing a substrate with concave portions for microlens used for a rear type projector will be explained.

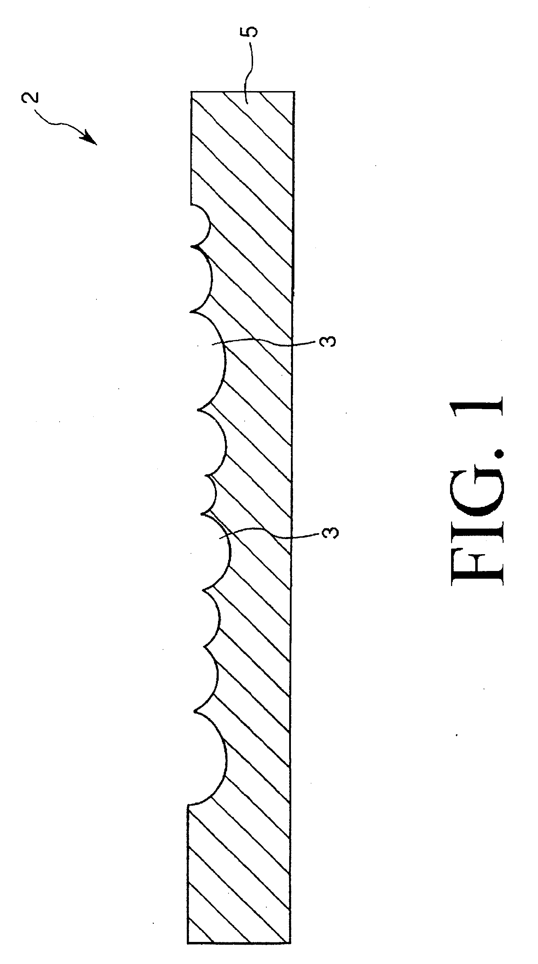

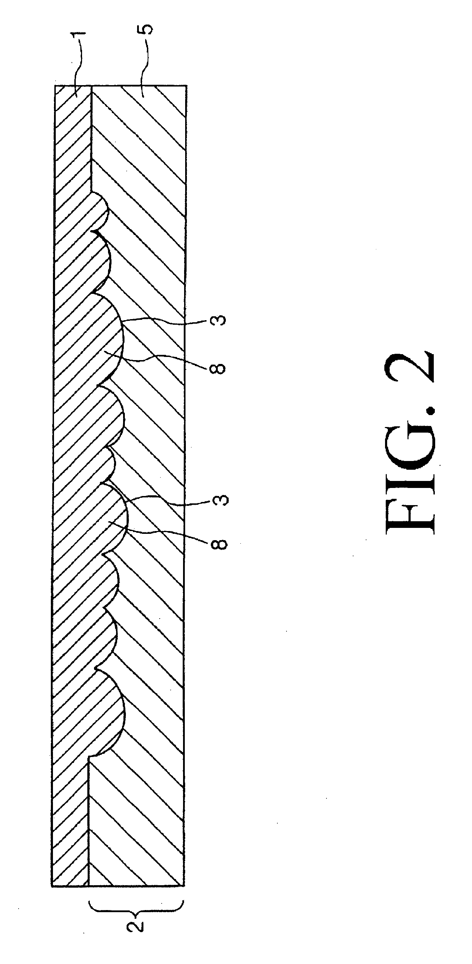

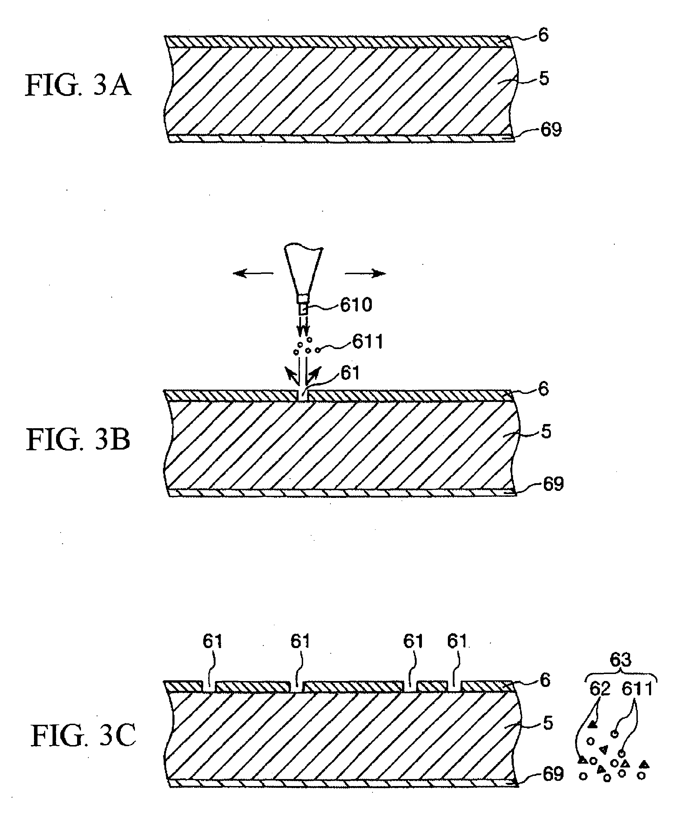

Fig. 1 is a schematic longitudinal sectional view of a substrate with concave portions for microlens. Fig. 2 is a schematic longitudinal sectional view of a substrate for microlens. Figs. 3 to 5 are schematic diagrams for explaining a method of manufacturing the substrate with concave portions for microlens shown in Fig. 1.

As shown in Fig. 1, a substrate with concave portions for microlens 2 has plural concave portions (concave portions microlens) 3 arranged at random.

With such a substrate with concave portions for microlens 2 as a mold, the substrate with concave portions for microlens 2 is used to transfer shapes of concave portions 3. This makes it possible to obtain a substrate for microlens 1 shown in Fig. 2 in which microlenses 8 are arranged at random.

(1) First, in manufacturing the substrate with concave portions for microlens 2, a base substrate 5 is prepared.

As the base substrate 5, a base substrate having uniform thickness without warp or scratches is suitably used.

Examples of a material of the base substrate 5 include soda glass, crystalline glass, quartz glass, lead glass, potassium glass, and borosilicate glass.

(2) As shown in Fig. 3A, a mask 6 is formed on the surface of the base substrate 5 prepared. A rear surface protecting film 69 is formed on the rear surface (a surface on the opposite side of the surface on which the mask 6 is formed) of the base substrate 5.

As the mask 6, it is preferable to use a mask in which initial holes 61 can be formed by shot blast in step (3) described later and that has resistance against etching in step (4) described later. In other words, the mask 6 is preferably formed such that an etching rate thereof is substantially equal to or smaller than that of the base substrate 5.

From such a viewpoint, examples of a material forming the mask 6 include metal such as Cr, Au, Ni, Ti, and Pt, alloys containing two or more of these kinds of metal, oxides of these kinds of metal (metal oxides), silicon, and resin. The mask 6 may be formed in a laminated structure of plural layers formed from different materials such as Cr (or Cr oxide) and Au.

A method of forming the mask 6 is not specifically limited. However, when the mask 6 is formed from a metal material such as Cr or Au or a metal oxide (e.g., Cr oxide), it is possible to suitably form the mask 6 according to, for example, the evaporation method or the sputtering method. When the mask 6 is formed from silicon, it is possible to suitably form the mask according to, for example, the sputtering method or the CVD method.

The thickness of the mask 6 depends on a material forming the mask 6. The thickness of the mask 6 is preferably in the range of about 0.05 to 2 µm and more preferably in the range of about 0.1 to 0.5 µm. Consequently, in applying the shot blast in step (3) described later, it is possible to surely form the initial holes 61 according to collision of the powder for grinding.

The rear surface protecting film 69 is a film for protecting the rear surface of the base substrate 5 in the next and the subsequent steps. With the rear surface protecting film 69, erosion, deterioration, and the like of the rear surface of the base substrate 5 are suitably prevented. The rear surface protecting film 6 is formed of, for example, the same material as the mask 6. Therefore, it is possible to provide the rear surface protecting film 69 simultaneously with the formation of the mask 6 and in the same manner as the mask 6.

(3) As shown in Fig. 3B, it is possible to form plural initial holes 61, which serve as mask openings in the case of etching described later, in the mask 6 at random.

It is possible to apply the grinding method according to the present invention to the formation of the initial holes 61.

Specifically, a nozzle 610 is arranged in a position a predetermined distance apart from the mask 6. An abrasive (the powder for grinding according to the present invention) 611 is jetted from the nozzle 610 while the nozzle 610 and the base substrate 5 are relatively moved (moved in parallel). Consequently, as shown in Fig. 3C, the initial holes 61 are formed at random in places of the mask 6 where the abrasive 611 has collided.

In this case, it is possible to form the initial holes 61 more at random by jetting the abrasive 611 in a relatively wide area.

The abrasive 611, to which the powder for grinding according to the present invention is applied, has a relatively high specific gravity equal to or higher than 8.5. Therefore, even if particles of the abrasive 611 are reduced in diameter, the abrasive 611 still has a sufficient grinding force. It is possible to surely form the initial holes 61 having a small diameter at high dimensional accuracy.

In the explanation of this embodiment, the initial holes 61 are formed at random. However, the initial holes 61 may be formed to be regularly arranged.

A shape of the initial holes 61 is not specifically limited. Other than a circular shape, the initial holes 61 may be formed in an oblong shape, a rectangular shape, and a groove shape.

When the initial holes 61 are formed in this way, as shown in Fig. 3C, a mixture 63 of grinding wastes 62 of the initial holes 61 and the abrasive 611 jetted is formed.

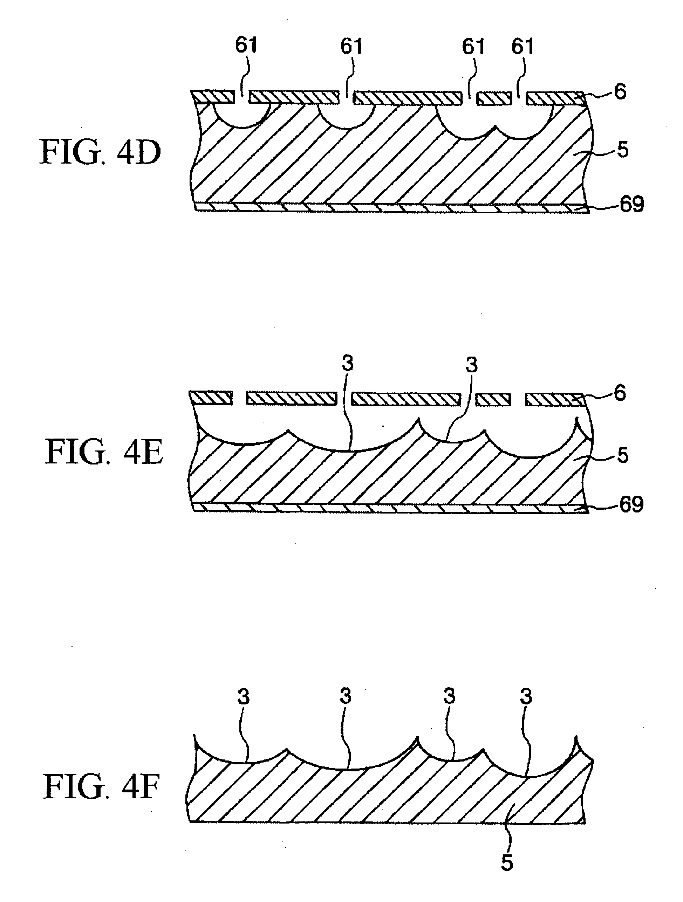

(4) As shown in Figs. 4D and 4E, etching is applied to the base substrate 5 using the mask 6. This makes it possible to form a large number of concave portions 3 in the base substrate 5.

A method of etching is not specifically limited. Examples of the method of etching include wet etching and dry etching.

When the etching is applied to the base substrate 5 covered with the mask 6 in which the initial holes 61 are formed, as shown in Fig. 4D, the base substrate 5 is etched with the initial holes 61 as starting points. The large number of concave portions 3 shown in Fig. 4E are formed in positions on the base substrate 5 on which the arrangement of the initial holes 61 is reflected.

(5) As shown in Fig. 4F, the mask 6 and the rear surface protecting film 69 are removed.

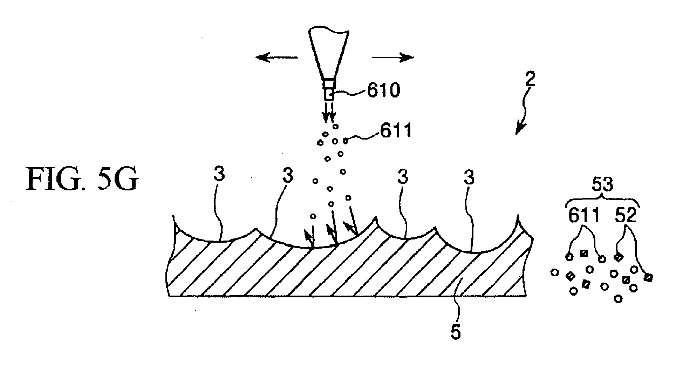

(6) As shown in Fig. 5G, the abrasive (the powder for grinding according to the present invention) 611 is jetted again from the nozzle 610 to the surface of the base substrate 5. This makes it possible to reduce irregularities on the surface of the concave portions 3 formed on the base substrate 5 and improve smoothness. As a result, the microlenses 8 formed in the concave portions 3 have high smoothness of the surface.

The abrasive 611 has a high grinding force because of a high specific gravity. Thus, it is possible to perform the smoothing processing in a relatively short time.

After this step is completed, as shown in Fig. 5G, a mixture 53 of the grinding wastes 52 of the base substrate 5 and the abrasive 611 jetted is formed.

As described above, it is possible to manufacture the substrate with concave portions for microlens 2.

It is possible to separate and collect the mixture 63 formed in step (3) and the mixture 53 formed in this step making use of a difference between a specific gravity of the abrasive 611 and specific gravities of the grinding wastes 52 and 62.

Since the grinding wastes 52 in the mixture 53 is formed from a glass material, a difference between the specific gravity of the grinding wastes 52 and the specific gravity of the abrasive 611 is large. It is possible to surely separate and collect the abrasive 611 making use of this difference.

In the grinding wastes 62 in the mixture 63, the grinding wastes 62 formed from the materials forming the mask 6 such as silicon and resin has a particularly low specific gravity. Thus, a difference between the specific gravity of the grinding wastes 62 and the specific gravity of the abrasive 611 is large. It is also possible to surely separate and collect the abrasive 611 maikig use of this difference.

As a separation method making use of a difference in specific gravities, it is possible to use methods such as centrifugal separation, inertia separation, and gravity settling.

It is possible to serve the powder for grinding collected in this way for reuse at least once. This makes it possible to reduce a disposal quantity of the powder for grinding and realize a reduction in cost of a grinding processing in which the powder for grinding is used.

The powder for grinding and the grinding method according to the present invention have been explained on the basis of the preferred embodiment. However, the present invention is not limited to this.

For example, in the explanation of the embodiment, the grinding method according to the present invention is applied to the method of manufacturing a substrate with concave portions for microlens. However, the present invention is not limited to such a case.

It is possible to apply the grinding method according to the present invention to, for example, a method of manufacturing a substrate for flat display panel such as a substrate for surface electron emitter display panel (SED), cutting, perforation, various kinds of burr removal, grounding treatment, and cleaning treatment for a semiconductor substrate, and micromachining and shot peening for a green compact.

Examples

1. Manufacturing of abrasives and substrates for evaluation

Example 1

<1> First, material were weighed to make sure that the following elements are contained in the material at the following contents, respectively, and a mixture of the respective materials was fused in a high-frequency induction furnace to obtain a fused material.

Contents of constituent elements
W: 30 wt%
Cr: 19 wt%
B: 1 wt%
Fe: Remainder

<2> The fused material obtained was pulverized according to the water atomize method. Consequently, an abrasive was obtained.

<3> A glass substrate having an average thickness of 3 mm was prepared.

<4> A glass paste was applied over a base substrate according to the roll coat method. This base substrate was placed on a hot plate and dried at 120°C for thirty minutes. Consequently, a glass containing layer was obtained on the base substrate.

<5> After laminating a dry film resist on the glass containing layer, a resist mask (a mask) having a belt-like opening having a width of 150 µm was formed according to the photolithography method and the etching method.

<6> The abrasive obtained in step <2> was jetted from above the resist mask to perform shot blast. Consequently, the glass containing layer in an area corresponding to the opening could be removed and a groove was formed in that area.

<7> The resist mask was removed. Consequently, a substrate for evaluation including the groove having a width of 150 µm was obtained.

<8> A mixture of grinding wastes formed in step <6> and the abrasive jetted was collected. The mixture was separated into the abrasive and the grinding wastes according to the centrifugal separation method and collection of the abrasive was attempted.

Examples 2 to 24 and Comparative Examples 1 to 4

Abrasives were obtained in the same manner as the example 1 except that elements contained in fused materials, contents of the elements, methods of manufacturing powder for grinding, and widths of grooves of substrates for evaluation were set as shown in Table 1, respectively. Substrates for evaluation were obtained using the abrasives. Collection of the abrasives was attempted in the same manner as the example 1.

In the example 5, the fused material contained both Fe and Ni and a ratio of Fe and Ni was 1:1 in a weight ratio.

In the comparative example 2, since a part of materials was not fused, the abrasive and the substrate for evaluation could not be manufactured.

Comparative Example 5

A substrate for evaluation was obtained in the same manner as the example 1 except that powder of alumina ceramics was used as an abrasive. As in the example 1, collection of the abrasive was attempted.

2. Evaluation

2-1 Evaluation of specific gravities, particle diameters, and tap densities of abrasives

Specific gravities, particle diameters, and tap densities of the abrasives manufactured in the respective examples and the respective comparative examples were measured and evaluated.

The specific gravities of the abrasives were measured according to the pycnometer method (AccuPuc1330 manufactured by Micrometrics was used) and the tap densities were measured according to the method defined in JPMA P08-1992 of the Japan Powder Metallurgy Association Standard.

The particle diameters were measured by the laser particle size analyzer. Average particle diameters and ratios of powder containing particles having the particle diameter equal to or larger than 50 µm were measured, respectively.

A result of the measurement in 2-1 is shown in Table 1.

**Table 1**

| | Constituent elements and contents thereof [wt%] | | | | | | | | | | Method of manufacturing powder | Characteristic of abrasive | | | | Width of grooves of substrate for evaluation (µm) |
|---|---|---|---|---|---|---|---|---|---|---|---|---|---|---|---|---|
| | W | Cr | B | C | Si | Mn | Al | Ti | Fe | Ni | | Specific specific gravity | Average particle diameter [µm] | Ratio of abrasive containing particles equal or larger than 50µm [wt%] | Tap density [g/cm³] | |
| Ex. 1 | 30 | 19 | 1 | - | - | - | - | - | 50 | - | | 9.1 | 15 | 5 | 5.8 | 150 |
| Ex. 2 | 30 | 19 | 1 | - | - | - | - | - | 50 | - | | 9.1 | 5 | 3 | 5.0 | 150 |
| Ex. 3 | 30 | 19 | 1 | - | - | - | - | - | 50 | - | | 9.1 | 5 | 3 | 5.1 | 50 |
| Ex. 4 | 30 | 19 | 1 | - | - | - | - | - | - | 50 | | 9.8 | 5 | 2 | 5.3 | 50 |
| Ex. 5 | 30 | 19 | 1 | - | - | - | - | - | 25 | 25 | | 9.4 | 5 | 3 | 5.1 | 50 |
| Ex. 6 | 32 | 19 | 1 | - | - | - | - | - | 48 | - | | 9.3 | 5 | 2 | 5.2 | 50 |
| Ex. 7 | 33 | 19 | 1 | - | - | - | - | - | 47 | - | | 9.3 | 5 | 2 | 5.1 | 50 |
| Ex. 8 | 35 | 19 | 1 | - | - | - | - | - | 45 | - | | 9.4 | 5 | 2 | 5.2 | 50 |
| Ex. 9 | 38 | 19 | 1 | - | - | - | - | - | 42 | - | | 9.7 | 6 | 3 | 5.3 | 50 |
| Ex. 10 | 40 | 19 | 1 | - | - | - | - | - | 40 | - | | 9.8 | 6 | 3 | 5.4 | 50 |
| Ex. 11 | 45 | 19 | 1 | - | - | - | - | - | 35 | - | | 10.2 | 6 | 3 | 5.6 | 50 |
| Ex. 12 | 50 | 19 | 1 | - | - | - | - | - | 30 | - | | 10.6 | 7 | 3 | 5.8 | 50 |
| Ex. 13 | 55 | 19 | 1 | - | - | - | - | - | 25 - | - | | 11.0 | 7 | 4 | 6.1 | 50 |
| Ex. 14 | 55 | 19 | 1 | - | - | - | - | - | 25 | - | Water | 11.0 | 15 | 5 | 7.4 | 150 |
| Ex. 15 | 30 | 3 | 1 | - | - | - | - | - | 66 | - | | 9.3 | 7 | 4 | 5.4 | 50 |
| Ex. 16 | 35 | 3 | 1 | - | - | - | - | - | 61 | - | | 9.6 | 8 | 5 | 5.5 | 50 |
| Ex. 17 | 30 | 25 | 1 | - | - | - | - | - | 44 | - | | 9.1 | 8 | 4 | 5.4 | 50 |
| Ex. 18 | 35 | 25 | 1 | - | - | - | - | - | 39 | - | | 9.4 | 9 | 5 | 5.5 | 50 |
| Ex. 19 | 30 | 19 | 0.5 | - | - | - | - | - | 50.5 | - | | 9.2 | 8 | 5 | 5.1 | 50 |
| Ex. 20 | 35 | 19 | 0.5 | - | - | - | - | - | 45.5 | - | | 9.6 | 9 | 5 | 5.4 | 50 |
| Ex. 21 | 30 | 19 | 4 | - | - | - | - | - | 47 | | | 8.5 | 6 | 3 | 5.6 | 50 |
| Ex. 22 | 35 | 19 | 4 | - | - | - | - | - | 42 | - | | 8.8 | 7 | 3 | 5.2 | 50 |
| Ex. 23 | 35 | 19 | 1 | 1 | - | - | - | - | 44 | - | | 9.2 | 7 | 4 | 5.4 | 50 |
| Ex. 24 | 35 | 19 | 1 | - | - | - | - | - | 45 | - | Gas | 9.4 | 12 | 5 | 6.0 | 50 |
| Comp. Ex. 1 | 10 | 19 | 1 | - | - | - | - | - | 70 | - | Water | 8.0 | 5 | 3 | 4.4 | 50 |
| Comp. Ex. 2 | 60 | 19 | 1 | - | - | - | - | - | 20 | - | | Not fused | | | | - |
| Comp. Ex. 3 | - | 19.1 | - | 0.1 | 1.3 | 0.8 | 3.0 | 0.3 | 75.4 | - | | 7.1 | 15 | 6 | 3.9 | 150 |
| Comp. Ex. 4 | - | 19.1 | - | 0.1 | 1.3 | 0.8 | 3.0 | 0.3 | 75.4 | - | | 7.1 | 7 | 4 | 3.5 | 50 |
| Comp. Ex. 5 | Alumina ceramics 100 | | | | | | | | | | - | 3.9 | 30 | 10 | 2.0 | 50 |

| | | | | | | | | | | | | | | | | |
|---|---|---|---|---|---|---|---|---|---|---|---|---|---|---|---|---|
| * Water : Water atomize method Gas: Gas atomize method | | | | | | | | | | | | | | | | |

As shown in Table 1, the abrasives manufactured in the respective examples had high specific gravities equal to or higher than 8.5

The specific gravities were higher as the contents of W were higher. Depending on the contents, the specific gravities were equal to or higher than 9.

On the other hand, the abrasives manufactured in the respective comparative examples had specific gravities lower than 8.5.

In most of the abrasive manufactured in the respective examples, average particle diameters were in the range of 5 to 15 µm and ratios of powder containing particles having particle diameters equal to or larger than 50 µm were equal to or lower than 5 wt%. Thus, the abrasives were the powder containing the extremely small particles. Moreover, since the tap densities were relatively high, it is surmised that the particles of the abrasives were formed in a spherical shape close to the perfect sphere.

The abrasive manufactured in the example 24 contained particles having a slightly larger average particle diameter. It is considered that this is because the abrasive was manufactured according to the gas atomize method.

2-2 Evaluation of collection and the abrasives after the collection

In the respective examples and the respective comparative examples, possibilities of collection of the abrasives were evaluated in accordance with the following criteria.

A: Practically, only the abrasive could be selectively collected.
B: The abrasive could be selectively collected but the grinding wastes were included a little.
C: The abrasive could be selectively collected but a large quantity of the grinding wastes were included.
D: The abrasive could not be selectively collected.

Appearances of the abrasives selectively collected were evaluated.

2-2-1 Evaluation of defects and deformations of the abrasives

First, concerning the collected abrasives manufactured in the respective examples and the respective comparative examples, after using the abrasives for grinding once, degrees of defects and deformations were evaluated in accordance with the following criteria, respectively.

After repeating use and collection of the abrasives ten times, respectively, degrees of defects and deformations were evaluated in the same manner in accordance with the following criteria.

After repeating use and collection of the abrasives thirty times, respectively, degrees of defects and deformations were evaluated in the same manner in accordance with the following criteria.

A: No defect and deformation of the abrasives were found.
B: Slight defects and deformations of the abrasives were found.
C: A large number of defects and deformations of the abrasives were found.
D: Defects and deformations were found in almost all the abrasives.

2-2-2 Evaluation of oxidation of the abrasives

First, concerning the collected abrasives manufactured in the respective examples and the respective comparative examples, after using the abrasives for grinding once, degrees of oxidation were evaluated in accordance with the following criteria, respectively.

After repeating use and collection of the abrasives ten times, respectively, degrees of oxidation were evaluated in the same manner in accordance with the following criteria.

After repeating use and collection of the abrasives thirty times, respectively, degrees of oxidation were evaluated in the same manner in accordance with the following criteria.

A: No oxidation of the abrasives was found
B: Slight oxidation of the abrasives was found.
C: Oxidation was found in a large number of portions of the abrasives.
D: Oxidation was found in almost all the abrasives.

2-3 Evaluation of grindability (time required)

Grindability (grinding speed) of the substrates for evaluation manufactured in the respective examples and- the respective comparative examples were evaluated.

In the evaluation, times required until formation of grooves in the substrates for evaluation was completed were measured. Since the times required vary depending on widths of the grooves, when widths of the grooves are equal, the times required were compared as follows.

Widths of the grooves: 150 µm (the examples 1, 2, and 14 and the comparative example 3)

Respective relative times were calculated at the time when a time required in the comparative example 3 was 1.

Widths of the grooves: 50 µm (the examples 3 to 13, the examples 15 to 24, and the comparative examples 1, 4, and 5)

Respective relative times were calculated at the time when a time required in the comparative example 4 was 1.

2-4 Evaluation of the substrates for evaluation

Appearances of the substrates for evaluation manufactured in the respective examples and the respective comparative examples were visually evaluated.

The evaluation of appearances was performed in accordance with the following items and evaluation criteria therefor.

2-4-1 Dimensional accuracy of the grooves

A: Dimensional accuracy was lower than ±3 µm
B: Dimensional accuracy was equal to or higher than ±3 µm and lower than ±6 µm
C: Dimensional accuracy was equal to or higher than ±6 µm and lower than ±10 µm
D: Dimensional accuracy was equal to or higher than ±10 µm

2-4-2 Abrasive caught in the grooves

A: No abrasive was caught in the grooves
B: Abrasive was slightly caught in the grooves
C: A large quantity of abrasive was caught in the grooves
D: A large quantity of abrasive was caught in the grooves and some parts of the substrate were not ground

2-4-3 Degrees of damages to the substrates for evaluation

A: No damage was found in the glass substrate and the resist mask
B: Slight damage was found in the glass substrate and the resist mask
C: Damage was found in a large number of portions of the glass substrate and the resist mask
D: Damage was found in a large number of portions of the glass substrate and the resist mask was peeled off

Results of the evaluations in 2-2 to 2-4 are shown in Table 2.

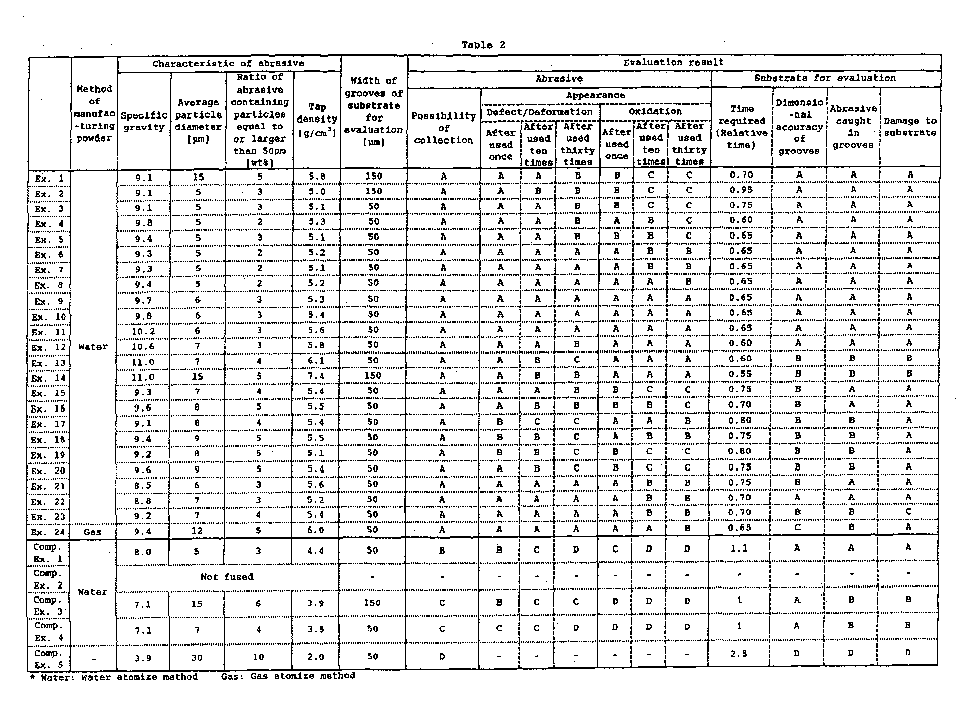

As shown in Table 2, in all the respective examples, only the abrasives could be selectively collected. On the other hand, in the respective comparative examples, the abrasives could not be collected or, even when the abrasives could be collected, inclusion of the grinding wastes was found.

After the abrasives manufactured in the respective examples were used once, no defect and deformation, oxidation, and the like of the abrasives was found or slight defects and deformations, oxidation, and the like of the abrasives were only found in all the abrasives.

Moreover, even after the abrasives manufactured in the examples 9 to 11 were used thirty times, no defect and deformation, oxidation, and the like of the abrasive was found.

Among the abrasives manufactured in the respective examples, when the abrasives having relatively high contents of Fe and Ni were used many times, there was the tendency that oxidation of the abrasives slightly increase. When the abrasives having relatively high contents of W were used many times, there was the tendency that defects and deformations of the abrasives slight increases.

On the other hand, even if the abrasives collected in the respective comparative examples were not used many times, a large number of defects and deformations, oxidation, and the like were found in a large number of abrasives.

Specifically, it is surmised that, since the abrasives in the comparative examples 1, 3, and 4 had low contents of W or did not contain W at all, contents of Fe increased and the abrasives tended to be easily oxidized.

It is surmised that, since the abrasives in the comparative examples 3 and 4 contained elements that tended to rapidly form an oxide film of Al, Ti, or the like, particles of powder tended to be deformed and, as a result, the abrasives were easily damaged at the time of collision.

It was confirmed that, in all the abrasives in the respective examples, a time required for grinding was short and grindability was high. It is considered that this is because specific gravities of the abrasives were reflected.

For example, when the example 1 and the comparative example 3. are compared, the widths of the grooves of the substrates for evaluation and the average particle diameters were equal, respectively. However, since the specific gravity was higher in the example 1, the time required was reduced in the example 1.

When the example 1 and the example 2 are compared, the widths of the grooves of the substrates for evaluation and the specific gravities were equal, respectively. However, since the average particle diameter was larger in the example 1, the time required was reduced in the example 1.

On the other hand, in all the abrasives in the respective comparative examples, grinding of the grooves required a long time.

In the substrates for evaluation in the respective examples, the dimensional accuracy of the grooves was high and almost no abrasive was caught in the grooves. It is surmised that this is because the particles of the abrasives in the respective examples were very small, had only small fluctuation in granularity, and was formed in a spherical shape close to the perfect sphere.

In the example 23, damages were found in the glass substrate and the resist mask of the substrate for evaluation. It is surmised that this is because, since the abrasive in the example 23 contained C (carbon) and hardness of the abrasive was extremely high (micro Vickers hardness HmV: 700 or more), the abrasive damaged the glass substrate and the resist mask.

In the example 24, the dimensional accuracy of the grooves formed in the substrate for evaluation was slightly low. This is because the abrasive in the example 24 was manufactured according to the gas atomize method and the average particle diameter of the particles of the abrasive was large.

## Claims

1. Powder for grinding that is manufactured according to an atomize method and used for grinding a surface of a base substrate to form concave portions, the powder for grinding containing as its components at least one of Fe and Ni and W (tungsten),
wherein a content of W is 30 to 55 wt% and a specific gravity thereof is equal to or higher than 8.5.

2. The powder for grinding as claimed in claim 1, wherein a total content of Fe and Ni is 25 to 70 wt%.

3. The powder for grinding as claimed in claim 1, wherein the powder for grinding further contains Cr at a content of 1 to 25 wt%.

4. The powder for grinding as claimed in claim 3, wherein the powder for grinding contains Fe as an essential element, and a ratio of Fe and Cr is in the range of 6:4 to 9.5:0.5 in a weight ratio.

5. The powder for grinding as claimed in claim 3, wherein Cr is contained in the powder in the form of a passivation film which covers at least a part of the surface of a particle of the powder for grinding.

6. The powder for grinding as claimed in claim 1, wherein the powder for grinding further contains B (boron) at a content of 0.5 to 4 wt%.

7. The powder for grinding as claimed in claim 1, wherein a content of C (carbon) is equal to or lower than 0.8 wt%.

8. The powder for grinding as claimed in claim 1, wherein an average particle diameter of the particles of the powder for grinding is in the range of 5 to 20 µm.

9. The powder for grinding as claimed in claim 1, wherein the powder for grinding contains particles having a particle diameter equal to or larger than 50 µm measured by a laser particle size analyzer, the ratio of such particles is equal to or lower than 5 wt%.

10. The powder for grinding as claimed in claim 1, wherein a tap density (defined by JPMA P08-1992 of the Japan Powder Metallurgy Association Standard) is equal to or higher than 5g/cm³.

11. The powder for grinding as claimed in claim 1, wherein the atomize method is a water atomize method.

12. The powder for grinding as claimed in claim 1, wherein the concave portions are grooves having an average width of w (µm), and an average particle diameter of the particles of the powder for grinding is in the range of 0.07w to 0.7w (µm).

13. The powder for grinding as claimed in claim 1, wherein the powder for grinding is served for reuse at least once.

14. A grinding method of grinding a surface of a base substrate with the powder for grinding defined by claim 1 to form concave portions on the surface.

15. The grinding method as claimed in claim 14, wherein, after the grinding, the powder for grinding is selectively collected out of a mixture of grinding wastes and the powder for grinding left after the grinding making use of a difference between a specific gravity of the grinding wastes and a specific gravity of the powder for grinding.
